# EUROPÄISCHE PATENTANMELDUNG

(11) **EP 2 610 982 A2**
(43) Veröffentlichungstag der Anmeldung: **03.07.2013**
(21) Anmeldenummer: 12197514.8
(22) Anmeldetag: 17.12.2012
(51) Int. Cl.: H02G 3/14

(54) **Elektrisches Installationsgerät**

(30) Priorität: 28.12.2011 DE 102011122548
(71) Anmelder: Schneider Electric Industries SAS, 92500 Rueil-Malmaison (FR)
(72) Erfinder: Vicktorius, Richard, 50733 Köln (DE); Klingberg, Axel, 51647 Gummersbach (DE); Cucciniello, Guiseppe, 08022 Barcelona (ES)
(74) Vertreter: Manitz, Finsterwald & Partner GbR

(57) **Zusammenfassung**

Ein elektrisches Installationsgerät weist einen Rahmen und einen Einsatz auf, wobei an der Außenseite des Rahmens oder des Einsatzes ein passives Element angeordnet ist.

## Beschreibung

Die vorliegende Erfindung betrifft ein elektrisches Installationsgerät mit einem Rahmen und einem Einsatz, wie z.B. Schalter, Steckdosen sowie Dimmer und ähnliche Einrichtungen für die Hausinstallation, insbesondere - aber nicht ausschließlich - Unterputzgeräte.

Der Erfindung liegt die Aufgabe zugrunde, ein elektrisches Installationsgerät zu schaffen, das mit einer Zusatzfunktion versehen ist

Die Lösung dieser Aufgabe erfolgt mit den im Anspruch 1 angegebenen Merkmalen. Erfindungsgemäß ist an der Außenseite des Rahmens und/oder des Einsatzes ein passives Element angeordnet, das mit der Umgebungsluft in Wechselwirkung steht. Unter einem passiven Element wird hierbei ein Element verstanden, dem keine elektrische oder sonstige Energie zugeführt werden muss. Das erfindungsgemäß vorgesehene passive Element an der Außenseite des elektrischen Installationsgeräts steht mit der Umgebungsluft in olfaktorischer und/oder analytischer Wechselwirkung.

Durch das erfindungsgemäße passive Element kann das elektrische Installationsgerät, beispielsweise ein Schalter, eine Steckdose, ein Bewegungsmelder oder ähnliches, auf einfache, Platz sparende und attraktive Weise als Duftspender herangezogen werden. In diesem Fall ist das passive Element beispielsweise mit Duftstoffen beladen. Alternativ oder zusätzlich kann das passive Element mit der Umgebungsluft in analytischer Wechselwirkung stehen, so dass bei einer Veränderung der Umgebungsluft, beispielsweise bei Sinken des Sauerstoffgehalts der Raumluft oder aber bei Ansteigen des Kohlenmonoxidgehalts in der Luft eine Farbveränderung des passiven Elements erfolgt oder aber das passive Element einen Geruchsstoff absondert, der als Warnsignal vom Menschen wahrgenommen werden kann. Auf diese Weise kann das erfindungsgemäße Installationsgerät zusätzlich als Raumluftindikator wirken. Falls das Installationsgerät beispielsweise in Räumen mit einer offenen Feuerstelle ausgerüstet ist, kann es als Warneinrichtung eingesetzt werden, die vor einem schädlichen Kohlenmonoxidanstieg warnt.

Vorteilhafte Ausführungsform der Erfindung sind in der Beschreibung, der Zeichnung sowie den Unteransprüchen beschrieben.

Nach einer ersten vorteilhaften Ausführungsform kann das passive Element ein sich in Korrelation zur Qualität der umgebenden Luft in seiner Farbe änderndes Material sein, wobei die Farbänderung insbesondere reversibel sein kann. Beispielsweise kann ein Material gewählt werden, das bei sich veränderndem Sauerstoffgehalt oder bei sich veränderndem Monoxidgehalt seine Farbe ändert, beispielsweise von Grün zu Rot. Bei dieser Ausführungsform besitzt das Installationsgerät somit zusätzlich die Funktion eines Raumluftsensors.

Nach einer weiteren vorteilhaften Ausführungsform kann das passive Element ein mit Duftstoff beladenes Material sein, beispielsweise ein mit Duftstoff imprägnierter, besprühter, getränkter oder auf andere Weise versehener Materialstreifen. Ein solcher Materialstreifen sorgt für eine angenehme Raumluft und lässt sich auf einfache Weise austauschen, wenn sich der ursprünglich enthaltene Duftstoff verflüchtigt hat.

Nach einer weiteren vorteilhaften Ausführungsform kann das elektrische Installationsgerät passive Elemente aus verschiedenen unterschiedlichen Materialien aufweisen, wobei diese verschiedenen Materialien eine unterschiedliche Farbe besitzen. In diesem Fall kann der Anwender auf einfache Weise zwischen verschiedenen Duftstoffen auswählen und die Auswahl wird ihm durch die unterschiedliche Farbe der verschiedenen Elemente symbolisiert.

Nach einer weiteren vorteilhaften Ausführungsform weist das passive Element eine insbesondere selbstklebende Folie auf. Bei dieser Ausführungsform kann beispielsweise auf einen Lichtschalter eine selbstklebende Folie aufgebracht sein, die auf Luftveränderungen farblich reagiert.

Nach einer weiteren vorteilhaften Ausführungsform ist an dem Installationsgerät eine Aussparung oder aber eine separate Halterung vorgesehen, in der das passive Element angeordnet ist. Beispielsweise kann der Rahmen des Installationsgeräts eine Vertiefung besitzen, in die das Element eingesetzt ist. Auch kann die separate Halterung rahmenartig ausgebildet sein, so dass das passive Element zunächst in die separate Halterung eingesetzt und dann an dem Installationsgerät montiert, beispielsweise in eine daran vorgesehene Aussparung eingesetzt wird. Bei dieser Ausführungsform ist das passive Element gut gehalten und kann auf einfache Weise vom Benutzer ausgetauscht werden.

Nach einer weiteren vorteilhaften Ausführungsform ist im Bereich des passiven Elements zumindest eine in das Innere des Installationsgeräts weisende Gasdurchtrittsöffnung vorgesehen. Bei dieser Ausführungsform wird der Umstand genutzt, dass durch elektrische Installationsanlagen und die damit verbundenen Kabelwege bzw. Leerrohre häufig eine Luftströmung entsteht, die von der Rückseite des Installationsgeräts in den Raum hinein strömt. Durch Vorsehen von Gasdurchtrittsöffnungen kann diese Luftströmung dazu verwendet werden, einen Duftstoff mit Hilfe der ohnehin vorhandenen Luftströmung in das Innere eines Raumes zu transportieren.

Grundsätzlich kann die Befestigung des passiven Elements an dem Installationsgerät auf vielfache Weise erfolgen. Neben den vorstehend beschriebenen Befestigungsmöglichkeiten kann auch ein Klettverschluss, ein doppelseitiges Klebeband oder Ähnliches Anwendung finden.

Nachfolgend wird die vorliegende Erfindung rein beispielhaft anhand einer vorteilhaften Ausführungsform unter Bezugnahme auf die beigefügte Zeichnung beschrieben. Es zeigt:

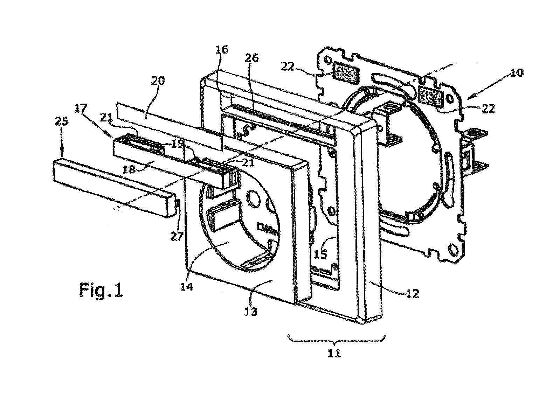

Fig. 1 eine Explosionsdarstellung eines elektrischen Installationsgerätes in Form einer Steckdose

Das als Ausführungsbeispiel dargestellte elektrische Installationsgerät ist eine Steckdose, die in eine übliche Wandinstallationsdose eingesetzt wird. Die Steckdose weist ein plattenförmiges Tragorgan 10 auf, das aus starrem Metallblech besteht und einen Tragrahmen für einen (nicht dargestellten) Gerätesockel bildet, der von der Wanddose aufgenommen wird. Das Tragorgan 10 wird in üblicher Weise mit spannbaren Krallen an der Wanddose befestigt, wobei sein flanschartiger Rand sich gegen die Raumwand legt.

Die Frontseite des Tragorgans 10 wird von einer Abdeckung 11 bedeckt. Diese umfasst hier einen Abdeckrahmen 12 und eine in den Abdeckrahmen 12 eingesetzte Zentralplatte 13, in der ein Steckdosentopf 14 ausgebildet ist. Die Zentralplatte 13 überdeckt den Rand der Öffnung 15 des Abdeckrahmens 12. In der Mitte des Bodens des Steckdosentopfes 14 befindet sich eine Schraube, mit der die Zentralplatte 13 an dem Gerätesockel befestigt ist, wobei die Zentralplatte 13 den Abdeckrahmen 12 fixiert. Der Abdeckrahmen überdeckt das Tragorgan 10, so dass dieses von außen nicht sichtbar ist.

Der Abdeckrahmen 12 enthält über der Öffnung 15, die die Zentralplatte 13 aufnimmt, eine Aufnahme 16 für einen Elementhalter 17. Die Aufnahme 16 ist ein durch den Abdeckrahmen hindurchgehender offener Durchbruch, durch den der Elementhalter 17 hindurch gesteckt werden kann. Der Elementhalter 17 besteht aus einer streifenförmigen starren Deckleiste 18, die an den Enden gebogen ist und dort Anpressschenkel 19 trägt, welche ein streifenförmiges passives Element 20 gegen die Rückseite der Deckplatte 18 drücken. Der gesamte Elementhalter 17 besteht aus einem einstückigen Kunststoffteil aus durchsichtigem Material.

An den Rückseiten der Schenkel 19 des Elementhalters 17 sind Klettverschlussteile 21 befestigt, die mit entsprechenden Klettverschlussteilen 22, welche auf dem Tragorgan 10 befestigt sind, zusammengreifen können. Die Klettverschlussteile 21 und 22 sind einander paarweise zugeordnet und sie haften aneinander, wenn sie gegeneinander gedrückt werden. Die Klettverschlussteile 21 sind an dem Elementhalter 17 mit einer Klebeschicht 23 festgeklebt und die Klettverschlussteile 22 sind auf der Frontseite des Tragorgans 10 mit einer Klebeschicht 24 festgeklebt. Die Klettverschlussteile sind an ihrem jeweiligen Tragteil fest und dauerhaft angebracht. Diese Anbringung kann auch beispielsweise mit einem doppelseitig beschichteten Klebeband erfolgen. Die Klebehaftung sollte dabei stärker sein als die Klettverschlusshaftung der beiden Klettverschlussteile, so dass beim Auseinanderziehen die Klettverschlussteile an ihrem jeweiligen Tragteil verbleiben.

Wie aus Fig. 1 zu ersehen ist, passt der Elementhalter 17 durch die vorne und hinten offene Aufnahme 16 hindurch. Der Elementhalter, der im Übrigen die Aufnahme 16 im Wesentlichen ausfüllt, kann also bei montierter Abdeckung 11 von vorne durch die Aufnahme 16 gegen die Klettverschlussteile 22 gedrückt werden. Diese sind in Höhe der Aufnahme 16 angeordnet, so dass die Klettverschlussteile 21 automatisch mit den Klettverschlussteilen 22 in Verbindung kommen. Bei der Erstmontage des Elementhalters kann das Klettverschlussteil 22 an dem Klettverschlussteil 21 haften, so dass das Festkleben am Tragorgan 10 mit dem Eindrücken des Elementhalters in die Aufnahme 16 erfolgt.

Wenn der Elementhalter von dem elektrischen Installationsgerät abgenommen werden soll, beispielsweise zum Auswechseln des passiven Elementes 20, wird die Abdeckung 11 entfernt, so dass der Elementhalter 17 nunmehr auf dem Tragorgan 10 haftet. Der Elementhalter kann dann durch Trennen der Klettverschlussteile 21, 22 abgenommen werden. Das passive Element 20 ist dann zur Entnahme zugänglich.

Der Elementhalter 17 ist von einer durchsichtigen Schutzleiste 25 bedeckt. Diese Schutzleiste hat U-förmigen Querschnitt und bildet eine Umfassung für den Elementhalter 17. In der Aufnahme 16 befinden sich an der Oberwand und der Unterwand Anschlagelemente 26 in Form von Rippen. Diese Anschlagelemente begrenzen die Einschubtiefe der Schutzleiste 25, deren Vorderseite bündig mit der Vorderseite des Abdeckrahmens 12 liegt. Die Schutzleiste 25 bildet also einen Verschluss der Aufnahme 16 des Abdeckrahmens. Die Schutzleiste 25 ist an den Enden mit Rastelementen 27 versehen, die an den Stirnseiten des Elementhalters 17 angreifen. Beim Abziehen des Abdeckrahmens 12 nimmt dieser die Schutzleiste 25 mit, während der Elementhalter 17 an dem Tragorgan 10 verbleibt. Ein Vorteil besteht darin, dass der Elementhalter 17 nicht auf eine bestimmte Form und Größe des Tragorgans 10 abgestimmt ist. Vielmehr kann jegliches Tragorgan 10 mit entsprechenden Klettverschlussteilen 22 versehen werden. Die Positionierung des Elementhalters 17 erfolgt ausschließlich durch die Abdeckung 11 bzw. den Abdeckrahmen 12, und zwar bei montierter Abdeckung.

Das passive Element 20 kann beispielsweise ein aus kartonartigem Material gebildeter Streifen sein, der mit Duftstoff getränkt ist. Andere erfindungsgemäße Ausführungsformen des passiven Elements sind in der Beschreibungseinleitung erläutert.

## Patentansprüche

1. Elektrisches Installationsgerät mit einem Rahmen (12) und einem Einsatz (13),
**dadurch gekennzeichnet, dass**
an der Außenseite des Rahmens (12) und/ oder des Einsatzes (13) ein mit der Umgebungsluft in olfaktorischer und/oder analytischer Wechselwirkung stehendes passives Element (20) angeordnet ist.

2. Installationsgerät nach Anspruch 1,
**dadurch gekennzeichnet, dass**
das passive Element (20) ein sich in Korrelation zur Qualität der umgebenden Luft insbesondere reversibel in seiner Farbe änderndes Material ist.

3. Installationsgerät nach Anspruch 1 oder 2,
**dadurch gekennzeichnet, dass**
das passive Element (20) ein mit einem Duftstoff beladenes Material ist.

4. Installationsgerät nach Anspruch 3,
**dadurch gekennzeichnet, dass**
mehrere mit verschiedenen Duftstoffen beladene unterschiedliche Materialien (20) vorgesehen sind und dass diese verschiedenen Materialien eine unterschiedliche Farbe besitzen.

5. Installationsgerät nach zumindest einem der vorstehenden Ansprüche,
**dadurch gekennzeichnet, dass**
das passive Element (20) eine insbesondere selbstklebende Folie aufweist.

6. Installationsgerät nach zumindest einem der vorstehenden Ansprüche,
**dadurch gekennzeichnet, dass**
eine Aussparung (16) vorgesehen ist, in der das passive Element (20) angeordnet ist.

7. Installationsgerät nach zumindest einem der vorstehenden Ansprüche,
**dadurch gekennzeichnet, dass**
eine separate Halterung (17) vorgesehen ist, in die das Element (20) eingesetzt ist.

8. Installationsgerät nach zumindest einem der vorstehenden Ansprüche,
**dadurch gekennzeichnet, dass**
im Bereich des passiven Elementes (20) zumindest eine Gasdurchtrittsöffnung vorgesehen ist.

9. Installationsgerät nach zumindest einem der vorstehenden Ansprüche,
**dadurch gekennzeichnet, dass**
im Bereich des passiven Elementes (20) zumindest eine in das Innere des Installationsgerätes weisende Gasdurchtrittsöffnung vorgesehen ist.
